(19) Europäisches Patentamt / European Patent Office / Office européen des brevets

(11) **EP 4 292 895 B1**

(12) **EUROPEAN PATENT SPECIFICATION**

(45) Date of publication and mention
of the grant of the patent:
**03.09.2025 Bulletin 2025/36**

(21) Application number: **22845221.5**

(22) Date of filing: **14.07.2022**

(51) International Patent Classification (IPC):
**B60W 20/20** (2016.01)     **B60W 20/40** (2016.01)
**B60K 6/442** (2007.10)

(52) Cooperative Patent Classification (CPC):
**B60K 6/387; B60K 6/442; B60W 10/02;**
**B60W 10/06; B60W 10/08; B60W 20/40;**
B60W 20/20; B60W 2050/001; B60W 2050/0041;
B60W 2510/0275; B60W 2510/0652;
B60W 2510/0695; B60W 2510/081;
B60W 2510/088; B60W 2510/1015;      (Cont.)

(86) International application number:
**PCT/CN2022/105712**

(87) International publication number:
**WO 2023/001056 (26.01.2023 Gazette 2023/04)**

(54) **METHOD FOR CONTROLLING DRIVING MODE SWITCHING OF HYBRID ELECTRIC VEHICLE, VEHICLE AND STORAGE MEDIUM**

VERFAHREN ZUR STEUERUNG DER FAHRMODUSUMSCHALTUNG EINES HYBRID-ELEKTROFAHRZEUGS, FAHRZEUG UND SPEICHERMEDIUM

PROCÉDÉ DE COMMANDE DE COMMUTATION DU MODE D'ENTRAÎNEMENT D'UN VÉHICULE ÉLECTRIQUE HYBRIDE, VÉHICULE ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2021 CN 202110814677**

(43) Date of publication of application:
**20.12.2023 Bulletin 2023/51**

(73) Proprietor: **China Faw Co., Ltd.**
**Changchun, Jilin 130011 (CN)**

(72) Inventors:
• **ZHU, Hao**
**Changchun, Jilin 130011 (CN)**
• **YU, Changhong**
**Changchun, Jilin 130011 (CN)**

• **XU, Jialiang**
**Changchun, Jilin 130011 (CN)**
• **LIU, Jiaming**
**Changchun, Jilin 130011 (CN)**

(74) Representative: **Penza, Giancarlo**
**Bugnion S.p.A.**
**Viale Lancetti, 17**
**20158 Milano (IT)**

(56) References cited:
EP-A1- 2 944 496           CN-A- 102 849 062
CN-A- 111 098 847         CN-A- 113 335 262
JP-A- 2000 299 903        JP-A- 2000 299 903
JP-A- 2006 129 576        JP-A- 2006 170 336
US-A1- 2020 164 864

(52) Cooperative Patent Classification (CPC): (Cont.)
B60W 2510/1095; B60W 2510/244;
B60W 2710/021; B60W 2710/0644;
B60W 2710/0666; B60W 2710/083; Y02T 10/40;
Y02T 10/62

(52) Cooperative Patent Classification (CPC): (Cont.)
B60W 2510/1095; B60W 2510/244;
B60W 2710/021; B60W 2710/0644;
B60W 2710/0666; B60W 2710/083; Y02T 10/40;
Y02T 10/62

**Description**

**Cross-Reference to Related Application**

The invention claims the priority of Chinese Patent Application No. 202110814677.9, filed to the Chinese Patent Office on July 19, 2021.

**Technical Field**

The invention relates to the technical field of vehicle control, and in particular to a method for controlling a driving mode switching of a hybrid electric vehicle, a vehicle, and a storage medium.

**Background**

With the advent of the global energy revolution, oil resources are increasingly scarce over time. Reduction in fuel consumption of conventional pure internal combustion engine-driven vehicles becomes increasingly costly and difficult while regulations on fuel consumption grow increasingly stringent. Reduction in fuel consumption of hybrid electric vehicles is expectable with the assistance of a driving motor. A P2 configuration and a dual-motor planetary gear power split configuration represented by European manufacturers have been mass-produced and exhibited remarkable performance on fuel consumption, and thus have won the favor of mass consumers. However, a three-clutch module with a C0 motor in the P2 configuration has a complex structure and high requirements for clutch control. The dual-motor planetary gear power split configuration involves complex three-motor control.

Since a dual-motor series-parallel configuration can facilitate switching between a hybrid electric vehicle (HEV) and a plug-in hybrid electric vehicle (PHEV), it has been identified as a hybrid power configuration easy to implement in recent years. In response to a vehicle being at a medium-low speed, a clutch is disengaged, the vehicle works in a series driving mode and is driven by a driving motor, and an engine stops or works in an economic electric generation area. In response to the vehicle being at a medium-high speed, the clutch is engaged, the vehicle works in a parallel driving mode and is directly driven by the engine at a fixed speed ratio, and a load on the engine can be adjusted through the driving motor, so that the engine still works in a low-oil-consumption economic area. With the above solution implemented, fuel consumption can be less than 4 L per 100 kilometers under the new European driving cycle (NEDC) test conditions.

Owing to variability of vehicle operating conditions and frequent series-parallel switching control of a vehicle driving mode, it is of vital importance to provide an efficient and reasonable series-parallel switching control method.

EP 2944496 A1 discloses a hybrid vehicle wherein a power transmission engaging/disengaging portion is applied or released to switch a form of drive sources for driving and a method for controlling same.

US 2020/164864 A1 discloses methods and a system for changing between series and parallel hybrid driveline operating modes.

JP 2000 299903 A discloses a controller for hybrid vehicle to prevent fluctuation of rotation or torque when switching is made between series running mode and parallel running mode.

EP 2944496 A1, US 2020/164864 A1 and JP 2000 299903 A provide related technical solutions; however, the above mentioned problem still remains unsolved.

**Summary**

The invention provides a method for controlling a driving mode switching of a hybrid electric vehicle, a vehicle, and a storage medium. Accordingly, frequent series-parallel switching demand of the vehicle can be met, a clear control strategy can be realized while timely and effective switching between series driving and parallel driving is ensured, and therefore calibration and application are facilitated.

The invention employs the technical solutions as follows:

A method for controlling a driving mode switching of a hybrid electric vehicle includes:

determining a switching state of the driving mode of the hybrid electric vehicle, where the switching state includes a state to switch the driving mode of the hybrid electric vehicle from a series driving mode to a parallel driving mode, and a state to switch the driving mode of the hybrid electric vehicle from the parallel driving mode to the series driving mode;

in response to the switching state being to switch the driving mode of the hybrid electric vehicle from the series driving mode to the parallel driving mode, adjusting a torque of an engine to a target torque of the engine in the parallel driving mode, adjusting a rotation speed of the engine to be the same as a current rotation speed of a driving motor in the series driving mode, engaging a clutch, reducing the torque of an electric generator to zero, and reducing the torque of the driving motor; where a torque reduction of the driving motor equals a torque reduction of the electric generator;

in response to the switching state being to switch the driving mode of the hybrid electric vehicle from the parallel driving mode to the series driving mode, increasing the torque of the electric generator to absorb the torque of the engine, transferring the torque absorbed by the electric generator to the driving motor with the same amplitude, in response to determining that the torque of the electric generator equals the torque of the engine, adjusting the torque of the driving motor to the target torque of the driving motor in the series driving mode, and in response to the rotation speed of the engine being equal to the rotation speed of the driving motor, disengaging the clutch, and adjusting the torque of the engine and the rotation speed of the engine to the target torque of the engine and a target rotation speed of the engine in the series driving mode respectively.

The invention further provides a vehicle. The vehicle is configured for executing the method for controlling a driving mode switching of a hybrid electric vehicle.

The invention further provides a storage medium. The storage medium stores a computer program, where the computer program implements the method for controlling a driving mode switching of a hybrid electric vehicle, when the program is executed by at least one processor.

## Brief Description of the Drawings

Fig. 1 is a schematic diagram of a connection structure of an engine, an electric generator, and a driving motor according to an embodiment of the invention;

Fig. 2 is a flowchart of a control method for switching a driving mode of a hybrid electric vehicle according to an embodiment of the invention.

In the figures:
1. Engine; 2. Electric generator; 3.Clutch; 4.Driving motor; 5.Main decelerator and differential; 6.Gear pair.

## Detailed Description

The technical solutions in the embodiments of the invention are described below with reference to the accompanying drawings, and the described examples are merely some examples rather than all examples of the invention.

In the description of the invention, unless otherwise explicitly specified and limited, the terms "connected", "connection", and "fixed" should be understood in a broad sense. For example, a connection can be a fixed connection, a detachable connection, an integrated connection, a mechanical connection, an electric connection, a direct connection, an indirect connection via an intermediate medium, communication inside two elements, or an interaction relation of two elements. For those of ordinary skill in the art, the specific meanings of the above terms in the invention can be understood according to specific circumstances.

In the invention, unless otherwise explicitly specified and limited, a first feature is "on" or "underneath" a second feature can include that the first feature and the second feature are in direct contact, or in indirect contact through another feature there between. Moreover, the first feature is "on", "above", and "over" the second feature includes that the first feature is exactly above the second feature or not, or indicates that the first feature has a higher level than the second feature. The first feature is "underneath", "below", and "under" the second feature includes that the first feature is exactly below the second feature or not, or indicates that the first feature has a lower level than the second feature.

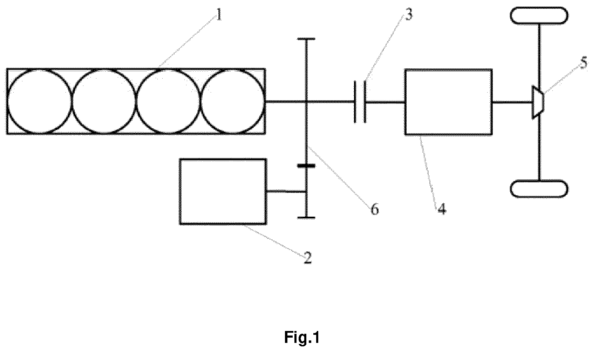

A vehicle is provided in the embodiment. As shown in Fig. 1, the vehicle includes an engine 1, an electric generator 2, a clutch 3, a driving motor 4, a main decelerator and differential 5, and a gear pair 6. The engine 1 is connected to the electric generator 2 through the gear pair 6, the clutch 3 is connected between the engine 1 and the driving motor 4, and the main decelerator and differential 5 is connected between the driving motor 4 and an axle.

In response to the vehicle being in a series driving mode, the clutch 3 is engaged, the vehicle is driven by the driving motor 4, and the engine 1 outputs negative torque and maintains at a desired rotation speed to ensure that a certain electric generation power is output. The "peak load shifting and valley filling" of an engine power is realized through charging and discharging of a battery to maintain that the engine 1 works in an economic fuel area.

In response to the vehicle being in a parallel driving mode, the clutch 3 is engaged, and a speed ratio of a rotation speed of the engine 1 to a vehicle speed is fixed. The engine 1 works in a zero-torque following mode, and the engine 1 and the driving motor 4 jointly drive the vehicle. In the parallel driving mode, a working state of the engine 1 has a driving and charging sub-mode, a driving and assisting sub-mode, and an engine 1 fuel cut-off sub-mode. The distribution relations among torque demanded by a driver, torque of the engine, and torque of the driving motor in different sub-modes vary. Accordingly, target torque of the engine also depends on different sub-modes.

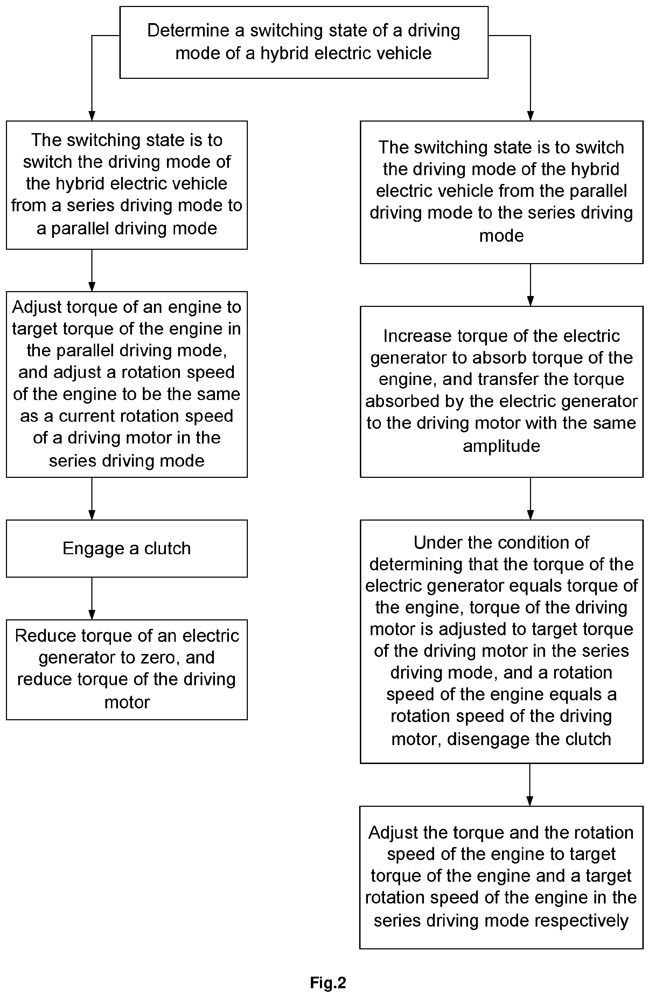

As shown in Fig. 2, a method for controlling a driving mode switching of a hybrid electric vehicle is provided in the embodiment. The control method is configured to the above-mentioned vehicle and includes:

At step 1: a switching state of the driving mode of the hybrid electric vehicle is determined.

The switching state of the driving mode of the hybrid electric vehicle includes a state to switch the driving mode of the hybrid electric vehicle from a series driving mode to a parallel driving mode, and a state to switch the driving mode of the hybrid electric vehicle from the parallel driving mode to the series driving mode.

A vehicle controller determines whether the vehicle (the hybrid electric vehicle) is required to be switched between the series driving mode and the parallel driving mode in real time, and in response to the vehicle being required to be switched between the series driving mode and the parallel driving mode in real time, determines whether the driving mode of the hybrid electric vehicle is switched from the series driving mode to the parallel driving mode or from the parallel driving mode to the series driving mode.

At step 2, in response to the switching state being to switch the driving mode of the hybrid electric vehicle from the series driving mode to the parallel driving mode, the method includes:

At step S21, the torque of an engine 1 is adjusted to target torque of the engine 1 in the parallel driving mode, and a rotation speed of the engine 1 is adjusted to be the same as a current rotation speed of a driving motor 4 in the series driving mode.

The target torque of the engine 1 is determined as $T_{Eng\_Tgt}$, target torque of the driving motor 4 is determined as $T_{Tm\_Tgt}$, the target rotation speed of the engine 1 is determined as $n_{Eng\_Tgt}$, and request torque of the electric generator 2 is determined as $T_{Gm\_Tgt}$; and in the parallel driving mode, a working state of the engine 1 has a driving and charging sub-mode, a driving and assisting sub-mode, and an engine 1 fuel cut-off sub-mode,

in the driving and charging sub-mode,

$$T_{Eng\_Tgt}=\min(T_{Drv}-T_{Tm\_PaSoc}, T_{Eng\_PaMax}),$$

in the driving and assisting sub-mode,

$$T_{Eng\_Tgt}=\min(T_{Drv}, T_{Eng\_PaMax}),$$

and

in the engine 1 fuel cut-off sub-mode,

$$T_{Eng\_Tgt}=-T_{Eng\_Los};$$

where

$$T_{Tm\_Tgt}=T_{Drv}; \quad n_{Eng\_Tgt}=n_{Tm}; \quad T_{Gm\_Tgt}=-T_{Eng\_Act}+(J_{Eng}+J_{Gm}+J_{Gear})dn_{Eng}/dt+T_{CL},$$

where

$T_{Drv}$ denotes a driver demand torque, $T_{Tm\_PaSoc}$ denotes a negative electric generation torque of the driving motor 4 in the parallel driving mode, calculated based on a current system on chip (SOC), $T_{Eng\_PaMax}$ denotes an upper torque limit of the engine 1 in the parallel driving mode, $T_{Eng\_Los}$ denotes a friction torque of the engine 1 at a current rotation speed, $n_{Tm}$ denotes a current rotation speed of the driving motor 4, $T_{Eng\_Act}$ denotes an actual torque of the engine 1, $J_{Eng}$ denotes a moment of inertia of the engine 1, $J_{Gm}$ denotes a moment of inertia of the electric generator 2, $J_{Gear}$ denotes a moment of inertia of a gear set between the engine 1 and the electric generator 2, and $T_{CL}$ denotes a speed adjustment proportional integral (PI) torque.

Since the engine 1 has a slower torque response than the driving motor 4, the torque of the engine 1 is not adjusted as far as possible while vehicle torque is adjusted through the driving motor 4. Accordingly, in the step, the torque of the engine 1 is required to be adjusted to the target torque of the engine 1 in the parallel driving mode. Moreover, in order to reduce the impact caused by a rotation speed difference of the clutch 3 in response to the clutch 3 being engaged, it is required to adjust the rotation speed of the engine 1 to be the same as the current rotation speed of the driving motor 4 in the series driving mode.

In the step, the clutch 3 is not engaged. Although the torque and the rotation speed of the engine 1 are adjusted to parameters required in the parallel driving mode, the vehicle is still in the series driving mode and is driven by the driving motor 4.

In response to the torque and the rotation speed of the engine 1 being adjusted, whether a difference between the torque of the engine 1 and the target torque of the engine 1 is less than a preset torque difference and whether a difference of the rotation speed of the engine 1 and the target rotation speed of the engine 1 is less than a preset rotation speed difference are determined in real time. The clutch 3 is engaged only if the difference between the torque of the engine 1 and the target torque of the engine 1 is less than the preset torque difference and the difference between the rotation speed of the engine 1 and the target rotation speed of the engine 1 is less than the preset rotation speed difference. The preset torque difference and the preset rotation speed difference are obtained through a test, in which a vehicle impact degree in an engagement stage of the clutch 3 and power continuity in a power source alternation stage are primarily considered.

At step S22, the clutch 3 is engaged.

In the engagement stage of the clutch 3, an engagement request is sent to the clutch 3. In response to the clutch 3 executing an engagement process, the electric generator 2 still maintains the rotation speed of the engine 1 as that of the driving motor 4. Therefore, no impact is generated in the engagement process of the clutch 3. The vehicle is still driven by the driving motor 4. Therefore, control targets of all components in the engagement stage of the clutch 3 are consistent with working data of the engine 1 in step S21.

Although a difference between the rotation speed of the engine 1 and the rotation speed of the driving motor 4 has been controlled to be slight through the electric generator 2 in step S21, in order to further reduce an impact degree of the clutch 3 during engagement, an oil pressure of the clutch 3 is also gradually increased in the engagement process of the clutch 3. An oil pressure loading speed is obtained in combination with vehicle performance calibration.

Compared with the step S21, control of the clutch 3 is added to the step, and the engagement stage of the clutch 3 is listed individually. Accordingly, step S21 involves a dynamic adjustment of the torque and the rotation speed of the engine 1, which is conducive to reuse of a module function.

At step S23, the torque of the electric generator 2 is reduced to zero, and the torque of the driving motor 4 is reduced.

In order to switch an output power of the engine 1 from electric transmission to mechanical transmission, electric generation torque of the electric generator 2 is gradually reduced. Therefore, the torque of the engine 1 is released to the clutch 3. The torque of the driving motor 4 is synchronously reduced, and a torque reduction of the driving motor 4 equals a torque reduction of the electric generator 2. Since the torque of the electric generator 2 and the torque of the driving motor 4 have the same synchronous adjustment amount, it can be ensured that total torque output by the engine 1, the electric generator 2, and the driving motor 4 to the outside is unchanged to ensure continuity of driving force.

After the torque of the electric generator 2 has been reduced to zero, and the torque of the driving motor 4 has been reduced to the target torque of the driving motor 4 in the parallel driving mode, the vehicle enters the parallel driving mode.

In the example, the target torque of the driving motor 4 is determined as $T_{Tm\_Tgt}$, and request torque of the electric generator 2 is determined as $T_{GmTgt}$,

$$\begin{cases} T_{Gm\_Tgt} = min\left(0, T^{*}_{Gm\_Tgt} + \sum \Delta T_{Stp}\right) \\ T_{Tm\_Tgt} = max\left(T_{Drv} - T_{Eng\_Act}, T^{*}_{Tm\_Tgt} - \sum \Delta T_{Stp}\right) \end{cases}$$

Wherein $T_{Drv}$ is the driver demand torque, $T_{Eng\_Act}$ denotes the actual torque of the engine 1, $\Delta T_{stp}$ denotes the synchronous torque adjustment step size of the electric generator 2 and the driving motor 4, and $T^{*}_{Gm\_Tgt}$ and $T^{*}_{Tm\_Tgt}$ denote the output request torque of the electric generator 2 and the output target torque of the driving motor 4 in a last calculation cycle respectively.

In response to a first stage of a switching process is ended, the torque of the engine 1 has already equaled the target torque of the engine in the parallel driving mode. That is, in this case, the engine 1 and the driving motor 4 can meet respective vehicle driving torque demands. Therefore, in the power source switching stage, the influence from a torque response difference between the engine 1 and the driving motor 4 on the vehicle power performance is not considered. Moreover, since no power interruption is generated in the switching process, the requirement for a total switching duration is low, and the influence from a dynamic response time of the driving motor 4 on the switching process can be neglected.

At step 3, if the switching state is to switch the driving mode of the hybrid electric vehicle from the parallel driving mode to the series driving mode, the method includes:

At step S31, the negative electric generation torque of the electric generator 2 is increased to absorb torque of the engine 1, and the torque absorbed by the electric generator 2 is transferred to the driving motor 4 with the same amplitude.

In the example, since the electric transmission is realized after the clutch 3 is disengaged, the mechanical transmission is required to be switched to the electric transmission before the clutch 3 is disengaged. The negative electric generation torque of the electric generator 2 is increased to absorb the torque of the engine 1. Moreover, the torque absorbed by the electric generator 2 is transferred to the driving motor 4 with the same amplitude. Accordingly, driving by the engine 1 is switched to driving by the driving motor 4 without changing total driving torque. Thereafter, all powers of the engine 1 are absorbed by the electric generator 2, and no torque is transmitted between two ends of the clutch 3. After the torque of the engine 1 is completely absorbed by the electric generator 2, that is, in response to the torque of the electric generator 2 being equal to the torque of the engine 1, power source switching is completed.

The target torque of the engine 1 is determined as $T_{Eng\_Tgt}$, the target torque of the driving motor 4 is determined as $T_{Tm\_Tgt}$, and request torque of the electric generator 2 is determined as $T_{Gm\_Tgt}$; where in the parallel driving mode, a working state of the engine 1 has a driving and charging sub-mode, a driving and assisting sub-mode, and an engine 1 fuel cut-off sub-mode,

in the driving and charging sub-mode,

$$T_{Eng\_Tgt}=min(T_{Drv}-T_{Tm\_PaSoc}, T_{Eng\_PaMax}),$$

in the driving and assisting sub-mode,

$$T_{Eng\_Tgt}=min(T_{Drv}, T_{Eng\_PaMax}),$$

in the engine fuel cut-off sub-mode,

$$T_{Eng\_Tgt}=-T_{Eng\_Los};$$

$$\begin{cases} T_{Gm\_Tgt} = max\left(-T_{Eng\_Act}, T^*_{Gm_{Tgt}} - \sum \Delta T_{Stp}\right) \\ T_{Tm\_Tgt} = min\left(T_{Drv}, T^*_{Tm\_Tgt} + \sum \Delta T_{Stp}\right) \end{cases}$$

where $T_{Drv}$ denotes torque demanded by a driver, $T_{Tm\_PaSoc}$ denotes negative electric generation torque of the driving motor 4 in the parallel driving mode, calculated based on a current SOC, $T_{Eng\_PaMax}$ denotes an upper torque limit of the engine 1 in the parallel driving mode, $T_{Eng\_Los}$ denotes the friction torque of the engine 1 at a current rotation speed, $T_{Eng\_Act}$ denotes the actual torque of the engine 1, $\triangle_{Tstp}$ denotes the synchronous torque adjustment step size of the electric generator 2 and the driving motor 4, and $T^*_{Gm\_Tgt}$ and $T^*_{Tm\_Tgt}$ denote the output request torque of the electric generator 2 and the output target torque of the driving motor 4 in a last calculation cycle respectively.

At stepS32, under the condition of determining that the torque of the electric generator 2 equals the torque of the engine 1, the torque of the driving motor 4 is adjusted to the target torque of the driving motor 4 in the series driving mode, and the rotation speed of the engine 1 equals the rotation speed of the driving motor 4, the clutch 3 is disengaged.

In the embodiment, in the disengagement process of the clutch 3, since the disengagement process requires a certain time, in order to avoid the impact caused by inconsistent rotation speeds at two ends of the clutch 3 in such a period, the electric generator 2 adjusts the rotation speed of the engine 1 to be the same as that of the driving motor 4 through rotation speed control. In this process, all vehicle driving torque is executed by the driving motor 4.

The target torque of the driving motor 4 is determined as $T_{Tm\_Tgt}$, the target rotation speed of the engine 1 is determined as $n_{Eng\_Tgt}$, and the request torque of the electric generator 2 is determined as $T_{Gm\_Tgt}$,

$$T_{Tm\_Tgt}=T_{Drv}; n_{Eng\_Tgt}=n_{Tm}; T_{Gm\_Tgt}=-T_{Eng\_Act}+(J_{Eng}+J_{Gm}+J_{Gear})dn_{Eng}/dt+T_{CL},$$

$T_{Drv}$ denotes the driver demand torque, $n_{Tm}$ denotes a current rotation speed of the driving motor 1, $T_{Eng\_Act}$ denotes the actual torque of the engine 1, $J_{Eng}$ denotes the moment of inertia of the engine 1, $J_{Gm}$ denotes the moment of inertia of the electric generator 2, $J_{Gear}$ denotes the moment of inertia of a gear set between the engine 1 and the electric generator 2, and $T_{CL}$ denotes speed adjustment PI torque.

At stepS33, the torque and the rotation speed of the engine 1 are adjusted to target torque of the engine 1 and a target rotation speed of the engine 1 in the series driving mode respectively.

In the embodiment, after the clutch 3 is disengaged, the engine 1 has been disconnected from the driving motor 4. In this case, the engine is already in an "electric transmission" state, the torque and the rotation speed of the engine 1 are adjusted to the target torque of the engine 1 and the target rotation speed of the engine 1 in the series driving mode. The driving motor 4 independently drives the vehicle. In such a stage, the torque of the engine 1, the torque of the driving motor 4, and the rotation speed of the engine 1 match corresponding data in the series driving mode. After the torque and the rotation speed of the engine 1 are adjusted to be close to the target torque of the engine 1 and the target rotation speed of the engine 1 in the series driving mode, a torque and rotation speed adjustment stage of the engine 1 is ended, and the vehicle enters the series driving mode.

The target torque of the engine 1 is determined as $T_{Eng\_Tgt}$, and the target rotation speed of the engine 1 is determined as $n_{Eng\_Tgt}$, where

$$T_{Eng\_Tgt}=T_{Eng\_Se}, \text{ and } n_{Eng\_Tgt}=n_{Eng\_Se},$$

where

$T_{Eng\_Se}$ and $n_{Eng\_Se}$ denote torque and a rotation speed, calculated through a vehicle energy management module, of the engine at an electric generation power target point.

In the embodiment, by analyzing the vehicle series-parallel driving mode, the process from the series driving mode to the parallel driving mode is divided into three stages, and the process from the parallel driving mode to the series driving mode is also divided into three stages. Finally, such control is completed through four software modules. Therefore, frequent series-parallel switching demand of the vehicle can be met, a software structure is simplified while timely and effective switching between series driving and parallel driving is ensured, and therefore calibration and application of a software model are facilitated.

In response to being at a medium-low speed, the vehicle works in the series driving mode, and the rotation speed of the engine 1 is decoupled from a vehicle speed. The electric generator 2 works in a high-efficiency area for electric generation, and a loss of an electric energy conversion efficiency is compensated after the fuel economy of the engine 1 is improved to realize a high efficiency of a system. When the vehicle speed is high and a vehicle driving power is moderate, the vehicle works in the parallel driving mode, and the clutch 3 is engaged, which is equivalent to a high gear of a conventional vehicle. The high fuel economy can still be obtained by reasonably setting the speed ratio. The electric generator 2 works in a zero-torque following mode, and the engine 1 and the driving motor 4 jointly drive the vehicle. The essence of switching from series driving to parallel driving is to switch from the electric transmission to the mechanical transmission from the engine 1 to a wheel end in terms of power. In terms of torque, it is to switch from independent driving by the driving motor 4 to joint driving by the engine 1 and the driving motor 4 while the consistency of the vehicle driving torque and the rotation speed in the switching process is ensured, avoiding the switching impact.

In addition, since speed ratios of different components vary, in order to ensure that the torque and the rotation speed of each component can be directly compared and calculated, in the embodiment, the rotation speeds and the torque of a plurality of components are converted to one fixed component, that is, the engine, according to a speed ratio relation. Therefore, the consistency of reference points is realized, and the control accuracy is improved.

A storage medium is further provided in the example. The storage medium stores a computer program, where the computer program implements the above control method for switching a driving mode of a hybrid electric vehicle, when the program is executed by a processor.

Through the above description of the embodiments, those skilled in the art can clearly understand that the invention can be implemented through software and general-purpose hardware, and certainly can also be implemented through hardware. Based on such understanding, the technical solutions of the invention can be embodied in the form of software products. The computer software products can be stored in computer-readable storage media, such as a computer floppy disk, a read-only memory (ROM), a random access memory (RAM), a flash, a hard disk or optical disk, etc., and include several instructions to make a computer apparatus (which can be a personal computer, a server, a network apparatus, etc.) execute the method in each example of the invention.

## Claims

1. A method for controlling a driving mode switching of a hybrid electric vehicle, comprising:

   determining a switching state of the driving mode of the hybrid electric vehicle, wherein the switching state comprises a state to switch the driving mode of the hybrid electric vehicle from a series driving mode to a parallel driving mode, and a state to switch the driving mode of the hybrid electric vehicle from the parallel driving mode to the series driving mode;

in response to the switching state being to switch the driving mode of the hybrid electric vehicle from the series driving mode to the parallel driving mode, adjusting a torque of an engine (1) to a target torque of the engine (1) in the parallel driving mode, adjusting a rotation speed of the engine (1) to be the same as a current rotation speed of a driving motor (4) in the series driving mode, engaging a clutch (3), reducing the torque of an electric generator (2) to zero, and reducing the torque of the driving motor (4); wherein a torque reduction of the driving motor (4) equals a torque reduction of the electric generator (2);

in response to the switching state being to switch the driving mode of the hybrid electric vehicle from the parallel driving mode to the series driving mode, increasing the torque of the electric generator (2) to absorb the torque of the engine (1), and transferring the torque absorbed by the electric generator (2) to the driving motor (4) with the same amplitude, and in response to determining that the torque of the electric generator (2) equals the torque of the engine (1), adjusting the torque of the driving motor (4) to the target torque of the driving motor (4) in the series driving mode, and in response to the rotation speed of the engine (1) being equal to the rotation speed of the driving motor (4), disengaging the clutch (3), and adjusting the torque of the engine (1)and the rotation speed of the engine (1) to the target torque of the engine (1) and a target rotation speed of the engine (1) in the series driving mode respectively.

2. The method for controlling a driving mode switching of a hybrid electric vehicle as claimed in claim 1, wherein adjusting a torque of an engine (1) to a target torque of the engine (1) in the parallel driving mode, and adjusting a rotation speed of the engine (1) to be the same as a current rotation speed of a driving motor (4) in the series driving mode comprise:

Determining the target torque of the engine (1) as $T_{Eng\_Tgt}$, the target torque of the driving motor (4) as $T_{Tm\_Tgt}$, the target rotation speed of the engine (1) as $n_{Eng\_Tgt}$, and a request torque of the electric generator (2) as $T_{Gm\_Tgt}$, wherein in the parallel driving mode, a working state of the engine (1) comprises a driving and charging sub-mode, a driving and assisting sub-mode, and an engine (1) fuel cut-off sub-mode, and

in the driving and charging sub-mode,

$$T_{Eng\_Tgt}=\min(T_{Drv}-T_{Tm\_PaSoc},\ T_{Eng\_PaMax}),$$

in the driving and assisting sub-mode,

$$T_{Eng\_Tgt}=\min(T_{Drv},\ T_{Eng\_PaMax}),$$

in the engine (1) fuel cut-off sub-mode,

$$T_{Eng\_Tgt}=-T_{Eng\_Los};$$

$$T_{Tm\_Tgt}=T_{Drv};\ n_{Eng\_Tgt}=n_{Tm};\ T_{Gm\_Tgt}=-T_{Eng\_Act}+(J_{Eng}+J_{Gm}+J_{Gear})dn_{Eng}/dt+T_{CL};$$

wherein $T_{Drv}$ denotes a driver demand torque, $T_{Tm\_PaSoc}$ denotes a negative electric generation torque of the driving motor (4) in the parallel driving mode, calculated based on a current system on chip (SOC), $T_{Eng\_PaMax}$ denotes an upper torque limit of the engine (1) in the parallel driving mode, $T_{Eng\_Los}$ denotes a friction torque of the engine (1) at a current rotation speed, $n_{Tm}$ denotes the current rotation speed of the driving motor (4), $T_{Eng\_Act}$ denotes an actual torque of the engine (1), $J_{Eng}$ denotes a moment of inertia of the engine (1), $J_{Gm}$ denotes a moment of inertia of the electric generator (2), $J_{Gear}$ denotes a moment of inertia of a gear set between the engine (1) and the electric generator (2), and $T_{CL}$ denotes a speed adjustment proportional integral (PI) torque.

3. The method for controlling a driving mode switching of a hybrid electric vehicle as claimed in claim 1, wherein before engaging a clutch (3), the method further comprises: determining whether a difference between the torque of the engine (1) and the target torque of the engine (1) is less than a preset torque difference and whether a difference between the rotation speed of the engine (1) and the target rotation speed of the engine (1) is less than a preset rotation speed difference, and engaging the clutch (3) in response to the difference between the torque of the engine (1) and the target torque of the engine (1) being less than the preset torque difference and the difference between the rotation speed of the engine (1) and the target rotation speed of the engine (1) being less than the preset rotation speed difference.

4. The method for controlling a driving mode switching of a hybrid electric vehicle as claimed in claim 1, wherein in an engagement process of the clutch (3), an oil pressure of the clutch (3) is gradually increased, and an oil pressure loading speed in combination with a vehicle performance calibration is obtained.

5. The method for controlling a driving mode switching of a hybrid electric vehicle as claimed in claim 1, wherein reducing the torque of an electric generator (2) to zero, and reducing the torque of the driving motor (4) comprise: determining the target torque of the driving motor (4) as $T_{Tm\_Tgt}$, and request torque of the electric generator (2) as $T_{Gm\_Tgt}$,

$$\begin{cases} T_{Gm\_Tgt} = min\left(0, T^*_{Gm\_Tgt} + \sum \Delta T_{Stp}\right) \\ T_{Tm\_Tgt} = max\left(T_{Drv} - T_{Eng\_Act}, T^*_{Tm\_Tgt} - \sum \Delta T_{Stp}\right) \end{cases}$$

wherein $T_{Drv}$ denotes the driver demand torque, $T_{Eng\_Act}$ denotes the actual torque of the engine (1), $\triangle T_{stp}$ denotes a synchronous torque adjustment step size of the electric generator (2) and the driving motor (4), and $T^*_{Gm\_Tgt}$ and $T^*_{Tm\_Tgt}$ denote an output request torque of the electric generator (2) and an output target torque of the driving motor (4) in a last calculation cycle respectively.

6. The method for controlling a driving mode switching of a hybrid electric vehicle as claimed in claim 1, wherein increasing the torque of the electric generator (2) to absorb the torque of the engine (1), transferring the torque absorbed by the electric generator (2) to the driving motor (4) with the same amplitude comprise:

   Determining the target torque of the engine (1) as $T_{Eng\_Tgt}$, the target torque of the driving motor (4) as $T_{Tm\_Tgt}$, and the request torque of the electric generator (2) as $T_{Gm\_Tgt}$; and in the parallel driving mode, a working state of the engine (1) comprises a driving and charging sub-mode, a driving and assisting sub-mode, and an engine (1) fuel cut-off sub-mode,
   in the driving and charging sub-mode,

   $$T_{Eng\_Tgt}=min(T_{Drv}\text{-}T_{Tm\_PaSoc}, T_{Eng\_PaMax}),$$

   in the driving and assisting sub-mode,

   $$T_{Eng\_Tgt}=min(T_{Drv}, T_{Eng\_PaMax}),$$

   and
   in the engine (1) fuel cut-off sub-mode,

   $$T_{Eng\_Tgt}=\text{-}T_{Eng\_Los};$$

   $$\begin{cases} T_{Gm\_Tgt} = max\left(-T_{Eng\_Act}, T^*_{Gm_{Tgt}} - \sum \Delta T_{Stp}\right) \\ T_{Tm\_Tgt} = min\left(T_{Drv}, T^*_{Tm\_Tgt} + \sum \Delta T_{Stp}\right) \end{cases}$$

   wherein $T_{Drv}$ denotes the driver demand torque, $T_{Tm\_PaSoc}$ denotes the negative electric generation torque of the driving motor (4) in the parallel driving mode, calculated based on a current SOC, $T_{Eng\_Pamax}$ denotes the upper torque limit of the engine (1) in the parallel driving mode, $T_{Eng\_Los}$ denotes the friction torque of the engine (1) at a current rotation speed, $T_{Eng\_Act}$ denotes the actual torque of the engine (4), $\triangle T_{stp}$ denotes the synchronous torque adjustment step size of the electric generator (2) and the driving motor (4), and $T^*_{Gm\_Tgt}$ and $T^*_{Tm\_Tgt}$ denote the output request torque of the electric generator (2) and the output target torque of the driving motor (4) in a last calculation cycle respectively.

7. The method for controlling a driving mode switching of a hybrid electric vehicle as claimed in claim 1, wherein in response to determining that the torque of the electric generator (2) equals the torque of the engine (1), adjusting the torque of the driving motor (4) to the target torque of the driving motor (4) in the series driving mode, and a rotation speed of the engine (1) equals a rotation speed of the driving motor (4), the method comprises:
Determining the target torque of the driving motor (4) as $T_{Tm\_Tgt}$, the target rotation speed of the engine (1) as $n_{Eng\_Tgt}$, and the request torque of the electric generator (2) as $T_{GmTgt}$, and

$$T_{Tm\_Tgt}=T_{Drv}; \; n_{Eng\_Tgt}=n_{Tm}; \; T_{Gm\_Tgt}=-T_{Eng\_Act}+(J_{Eng}+J_{Gm}+J_{Gear})dn_{Eng}/dt+T_{CL};$$

Wherein $T_{Drv}$ denotes the driver demand torque, $n_{Tm}$ denotes the current rotation speed of the driving motor (4), $T_{Eng\_Act}$ denotes the actual torque of the engine (1), $J_{Eng}$ denotes the moment of inertia of the engine (1), $J_{Gm}$ denotes the moment of inertia of the electric generator (2), $J_{Gear}$ denotes the moment of inertia of a gear set between the engine (1) and the electric generator (2), and $T_{CL}$ denotes the speed adjustment PI torque.

8. The method for controlling a driving mode switching of a hybrid electric vehicle as claimed in claim 1, wherein adjusting the torque and the rotation speed of the engine (1) to a target torque of the engine (1) and a target rotation speed of the engine (1) in the series driving mode respectively comprises:
determining the target torque of the engine (1) as $T_{Eng\_Tgt}$, and the target rotation speed of the engine (1) as $n_{Eng\_Tgt}$, and

$$T_{Eng\_Tgt}=T_{Eng\_Se}, \; and \; n_{Eng\_Tgt}=n_{Eng\_Se};$$

wherein $T_{Eng\_Se}$ and $n_{Eng\_Se}$ denote a torque and a rotation speed of the engine at an electric generation power target point respectively, calculated through a vehicle energy management module.

9. A vehicle comprising an engine (1), an electric generator (2), a clutch (3), a driving motor (4), a main decelerator and differential (5), and a gear pair (6), wherein the engine (1) is connected to the electric generator (2) through the gear pair (6), the clutch (3) is connected between the engine (1) and the driving motor (4), and the main decelerator and differential (5) is connected between the driving motor (4) and an axle, wherein the vehicle is configured for executing the method for controlling a driving mode switching of a hybrid electric vehicle as claimed in any one of claims 1-8.

10. A storage medium storing a computer program, wherein the computer program implements the method for controlling a driving mode switching of a hybrid electric vehicle as claimed in any one of claims 1-8, when the program is executed by at least one processor.

**Patentansprüche**

1. Verfahren zur Steuerung einer Fahrmodusumschaltung eines Hybrid-Elektrofahrzeugs, umfassend:

Bestimmen eines Umschaltzustands des Fahrmodus des Hybrid-Elektrofahrzeugs, wobei der Umschaltzustand einen Zustand zum Umschalten des Fahrmodus des Hybrid-Elektrofahrzeugs von einem Serienfahrmodus in einen Parallelfahrmodus und einen Zustand zum Umschalten des Fahrmodus des Hybrid-Elektrofahrzeugs von dem Parallelfahrmodus in den Serienfahrmodus umfasst;
als Reaktion darauf, dass der Umschaltzustand darin besteht, den Fahrmodus des Hybrid-Elektrofahrzeugs von dem Serienfahrmodus in den Parallelfahrmodus umzuschalten, Anpassen eines Drehmoments eines Motors (1) auf ein Solldrehmoment des Motors (1) in dem Parallelfahrmodus, Anpassen einer Drehzahl des Motors (1), um die gleiche wie eine aktuelle Drehzahl eines Antriebsmotors (4) in dem Serienfahrmodus zu sein, Einrücken einer Kupplung (3), Reduzieren des Drehmoments eines elektrischen Generators (2) auf Null und Reduzieren des Drehmoments des Antriebsmotors (4); wobei eine Drehmomentreduzierung des Antriebsmotors (4) gleich einer Drehmomentreduzierung des elektrischen Generators (2) ist;
als Reaktion darauf, dass der Umschaltzustand darin besteht, den Fahrmodus des Hybrid-Elektrofahrzeugs von dem Parallelfahrmodus in den Serienfahrmodus zu schalten, Erhöhen des Drehmoments des elektrischen Generators (2), um das Drehmoment des Motors (1) zu absorbieren, und Übertragen des vom elektrischen Generator (2) absorbierte Drehmoments mit der gleichen Amplitude auf den Antriebsmotor (4), und als Reaktion darauf, dass bestimmt wird, dass das Drehmoment des elektrischen Generators (2) gleich dem Drehmoment des Motors (1) ist, Anpassen des Drehmoments des Antriebsmotors (4) auf das Solldrehmoment des Antriebsmotors (4) im Serienfahrmodus, und als Reaktion darauf, dass die Drehzahl des Motors (1) gleich der Drehzahl des Antriebsmotors (4) ist, Ausrücken der Kupplung (3) und Anpassen des Drehmoments des Motors (1) und der Drehzahl des Motors (1) jeweils auf das Solldrehmoment des Motors (1) und einer Solldrehzahl des Motors (1) im Serienfahrmodus.

2. Verfahren zur Steuerung einer Fahrmodusumschaltung eines Hybrid-Elektrofahrzeugs nach Anspruch 1, wobei das Anpassen eines Drehmoments eines Motors (1) auf ein Solldrehmoment des Motors (1) in dem Parallelfahrmodus und das Anpassen einer Drehzahl des Motors (1) auf dieselbe wie eine aktuelle Drehzahl eines Antriebsmotors (4) in dem Serienfahrmodus Folgendes umfasst:

Bestimmen des Solldrehmoments des Motors (1) als $T_{Eng\_Tgt}$, des Solldrehmoments des Antriebsmotors (4) als $T_{Tm\_Tgt}$, der Solldrehzahl des Motors (1) als $n_{Eng\_Tgt}$ und eines Anforderungsdrehmoments des elektrischen Generators (2) als $T_{Gm\_Tgt}$; wobei im Parallelfahrmodus ein Arbeitszustand des Motors (1) einen Fahr- und Lade-Untermodus, einen Fahr- und Unterstützungs-Untermodus und einen Kraftstoffabschalt-Untermodus des Motors (1) umfasst, und
im Fahr- und Lade-Untermodus, $T_{Eng\_Tgt}=min(T_{Drv}-T_{Tm\_PaSoc}, T_{Eng\_PaMax})$,
im Fahr- und Unterstützungs-Untermodus, $T_{Eng\_Tgt}=min(T_{Drv}, T_{Eng\_PaMax})$,
im Kraftstoffabschalt-Untermodus des Motors (1), $T_{Eng\_Tgt}=-T_{Eng\_Los}$;

$$T_{Tm\_Tgt}=T_{Drv}; \quad n_{Eng\_Tgt}=n_{Tm}; \quad T_{Gm\_Tgt}=-T_{Eng\_Act}+(J_{Eng}+J_{Gm}+J_{Gear})dn_{Eng}/dt+T_{CL};$$

wobei $T_{Drv}$ ein Fahrerbedarfsdrehmoment bezeichnet, $T_{Tm\_PaSoc}$ ein negatives elektrisches Erzeugungsdrehmoment des Antriebsmotors (4) im Parallelfahrmodus bezeichnet, das auf der Grundlage eines aktuellen Systems auf dem Chip (SOC) berechnet wird, $T_{Eng\_PaMax}$ eine obere Drehmomentgrenze des Motors (1) im Parallelfahrmodus bezeichnet, $T_{Eng\_Los}$ ein Reibungsdrehmoment des Motors (1) bei einer aktuellen Drehzahl bezeichnet, $n_{Tm}$ die aktuelle Drehzahl des Antriebsmotors (4) bezeichnet, $T_{Eng\_Act}$ ein Istdrehmoment des Motors (1) bezeichnet, $J_{Eng}$ ein Trägheitsmoment des Motors (1) bezeichnet, $J_{Gm}$ ein Trägheitsmoment des elektrischen Generators (2) bezeichnet, $J_{Gear}$ ein Trägheitsmoment eines Getriebesatzes zwischen dem Motor (1) und dem elektrischen Generator (2) bezeichnet und $T_{CL}$ ein Geschwindigkeitanpassungsproportionalintegral (PI)-Drehmoment bezeichnet.

3. Verfahren zur Steuerung einer Fahrmodusumschaltung eines Hybrid-Elektrofahrzeugs nach Anspruch 1, wobei das Verfahren vor dem Einrücken einer Kupplung (3) ferner Folgendes umfasst: Bestimmen, ob eine Differenz zwischen dem Drehmoment des Motors (1) und dem Solldrehmoment des Motors (1) kleiner als eine voreingestellte Drehmomentdifferenz ist und ob eine Differenz zwischen der Drehzahl des Motors (1) und der Solldrehzahl des Motors (1) kleiner als eine voreingestellte Drehzahldifferenz ist, und Einrücken der Kupplung (3) als Reaktion darauf, dass die Differenz zwischen dem Drehmoment des Motors (1) und dem Solldrehmoment des Motors (1) kleiner als die voreingestellte Drehmomentdifferenz ist und die Differenz zwischen der Drehzahl des Motors (1) und der Solldrehzahl des Motors (1) kleiner als die voreingestellte Drehzahldifferenz ist.

4. Verfahren zur Steuerung einer Fahrmodusumschaltung eines Hybrid-Elektrofahrzeugs nach Anspruch 1, wobei in einem Einrückvorgang der Kupplung (3) ein Öldruck der Kupplung (3) allmählich erhöht wird und eine Öldruckladegeschwindigkeit in Kombination mit einer Fahrzeugleistungskalibrierung erhalten wird.

5. Verfahren zur Steuerung einer Fahrmodusumschaltung eines Hybrid-Elektrofahrzeugs nach Anspruch 1, wobei das Reduzieren des Drehmoments eines elektrischen Generators (2) auf Null und das Reduzieren des Drehmoments des Antriebsmotors (4) Folgendes umfasst:
Bestimmen des Solldrehmoments des Antriebsmotors (4) als $T_{Tm\_Tgt}$ und des Anforderungsdrehmoments des elektrischen Generators (2) als $T_{Gm\_Tgt}$,

$$\begin{cases} T_{Gm\_Tgt} = min\left(0, T_{Gm\_Tgt}^{*} + \sum \Delta T_{Stp}\right) \\ T_{Tm\_Tgt} = max\left(T_{Drv} - T_{Eng\_Act}, T_{Tm\_Tgt}^{*} - \sum \Delta T_{Stp}\right) \end{cases}$$

wobei $T_{Drv}$ das Fahrerbedarfsdrehmoment bezeichnet, $T_{Eng\_Act}$ das Istdrehmoment des Motors (1) bezeichnet, $\triangle T_{stp}$ eine synchrone Drehmomentanpassungsschrittweite des elektrischen Generators (2) und des Antriebsmotors (4) bezeichnet und $T^{*}_{Gm\_Tgt}$ und $T^{*}_{T\_Tgt}$ jeweils ein Ausgangsanforderungsdrehmoment des elektrischen Generators (2) und ein Ausgangssolldrehmoment des Antriebsmotors (4) in einem letzten Berechnungszyklus bezeichnen.

6. Verfahren zur Steuerung einer Fahrmodusumschaltung eines Hybrid-Elektrofahrzeugs nach Anspruch 1, wobei das Erhöhen des Drehmoments des elektrischen Generators (2) zum Absorbieren des Drehmoments des Motors (1), Übertragen des vom elektrischen Generator (2) absorbierten Drehmoments auf den Antriebsmotor (4) mit der gleichen Amplitude Folgendes umfasst:

Bestimmen des Solldrehmoments des Motors (1) als $T_{Eng\_Tgt}$, des Solldrehmoments des Antriebsmotors (4) als $T_{Tm\_Tgt}$ und des Anforderungsdrehmoments des elektrischen Generators (2) als $T_{Gm\_Tgt}$; und im Parallelfahrmodus umfasst ein Arbeitszustand des Motors (1) einen Fahr- und Lade-Untermodus, einen Fahr- und Unterstützungs-Untermodus und einen Kraftstoffabschalt-Untermodus des Motors (1), im Fahr- und Lade-Untermodus, $T_{Eng\_Tgt}=min(T_{Drv}-T_{Tm\_PaSoc}, T_{Eng\_PaMax})$,
im Fahr- und Unterstützungs-Untermodus, $T_{Eng\_Tgt}=min(T_{Drv}, T_{Eng\_PaMax})$, und
im Kraftstoffabschalt-Untermodus des Motors (1), $T_{Eng\_Tgt}=-T_{Eng\_Los}$;

$$\begin{cases} T_{Gm\_Tgt} = max\left(-T_{Eng\_Act}, T^*_{Gm_{Tgt}} - \sum \Delta T_{Stp}\right) \\ T_{Tm\_Tgt} = min\left(T_{Drv}, T^*_{Tm\_Tgt} + \sum \Delta T_{Stp}\right) \end{cases}$$

wobei $T_{Drv}$ das Fahrerbedarfsdrehmoment bezeichnet, $T_{Tm\_Pasoc}$ das negative elektrische Erzeugungsdrehmoment des Antriebsmotors (4) im Parallelfahrmodus bezeichnet, das auf der Grundlage eines aktuellen SOC berechnet wird, $T_{Eng\_PaMax}$ die obere Drehmomentgrenze des Motors (1) im Parallelfahrmodus bezeichnet, $T_{Eng\_Los}$ das Reibungsdrehmoment des Motors (1) bei einer aktuellen Drehzahl bezeichnet, $T_{Eng\_Act}$ das Istdrehmoment des Motors (4) bezeichnet, $\triangle T_{stp}$ die synchrone Drehmomentanpassungsschrittweite des elektrischen Generators (2) und des Antriebsmotors (4) bezeichnet und $T^*_{Gm\_Tgt}$ bzw. $T^*_{Tm\_Tgt}$ das Ausgangsanforderungsdrehmoment des elektrischen Generators (2) und das Ausgangssolldrehmoment des Antriebsmotors (4) in einem letzten Berechnungszyklus bezeichnen.

7. Verfahren zur Steuerung einer Fahrmodusumschaltung eines Hybrid-Elektrofahrzeugs nach Anspruch 1, wobei das Verfahren als Reaktion darauf, dass bestimmt wird, dass das Drehmoment des elektrischen Generators (2) gleich dem Drehmoment des Motors (1) ist, das Anpassen des Drehmoments des Antriebsmotors (4) auf das Solldrehmoment des Antriebsmotors (4) im Serienfahrmodus und eine Drehzahl des Motors (1) gleich einer Drehzahl des Antriebsmotors (4) Folgendes umfasst:
Bestimmen des Solldrehmoments des Antriebsmotors (4) als $T_{Tm\_Tgt}$, der Solldrehzahl des Motors (1) als $n_{Eng\_Tgt}$ und des Anforderungsmoments des elektrischen Generators (2) als $T_{Gm\_Tgt}$, und

$$T_{Tm\_Tgt}=T_{Drv}; n_{Eng\_Tgt}=n_{Tm}; T_{Gm\_Tgt}=-T_{Eng\_Act}+(J_{Eng}+J_{Gm}+J_{Gear})dn_{Eng}/dt+T_{CL};$$

wobei $T_{Drv}$ das Fahrerbedarfsdrehmoment bezeichnet, $n_{Tn}$ die aktuelle Drehzahl des Antriebsmotors (4) bezeichnet, $T_{Eng\_Act}$ das Istdrehmoment des Motors (1) bezeichnet, $J_{Eng}$ das Trägheitsmoment des Motors (1) bezeichnet, $J_{Gm}$ das Trägheitsmoment des elektrischen Generators (2) bezeichnet, $J_{Gear}$ das Trägheitsmoment eines Radsatzes zwischen dem Motor (1) und dem elektrischen Generator (2) bezeichnet und $T_{CL}$ das Geschwindigkeitsanpassungs-PI-Drehmoment bezeichnet.

8. Verfahren zur Steuerung einer Fahrmodusumschaltung eines Hybrid-Elektrofahrzeugs nach Anspruch 1, wobei das Anpassen des Drehmoments und der Drehzahl des Motors (1) auf ein Solldrehmoment des Motors (1) und eine Solldrehzahl des Motors (1) im Serienfahrmodus jeweils Folgendes umfasst:
Bestimmen des Solldrehmoments des Motors (1) als $T_{Eng\_Tgt}$ und der Solldrehzahl des Motors (1) als $n_{Eng\_Tgt}$, und

$$T_{Eng\_Tgt}=T_{Eng\_Se}, \text{ und } n_{Eng\_Tgt}=n_{Eng\_Se};$$

wobei $T_{Eng\_se}$ und $n_{Eng\_se}$ jeweils ein Drehmoment und eine Drehzahl des Motors bei einem Stromerzeugungsleistungssollpunkt bezeichnen, die durch ein Fahrzeugenergieverwaltungsmodul berechnet werden.

9. Fahrzeug, umfassend einen Motor (1), einen elektrischen Generator (2), eine Kupplung (3), einen Antriebsmotor (4), einen Hauptverzögerer und ein Differential (5) und ein Zahnradpaar (6), wobei der Motor (1) über das Zahnradpaar (6) mit dem elektrischen Generator (2) verbunden ist, die Kupplung (3) zwischen dem Motor (1) und dem Antriebsmotor (4) verbunden ist und der Hauptverzögerer und das Differential (5) zwischen dem Antriebsmotor (4) und einer Achse verbunden sind, wobei das Fahrzeug zum Ausführen des Verfahrens zur Steuerung einer Fahrmodusumschaltung eines Hybrid-Elektrofahrzeugs nach einem der Ansprüche 1-8 ausgelegt ist.

10. Speichermedium, das ein Computerprogramm speichert, wobei das Computerprogramm das Verfahren zur Steuerung einer Fahrmodusumschaltung eines Hybrid-Elektrofahrzeugs nach einem der Ansprüche 1-8 implementiert, wenn das Programm durch mindestens einen Prozessor ausgeführt wird.

**Revendications**

1. Procédé de commande d'une commutation du mode d'entraînement d'un véhicule électrique hybride, comprenant :

déterminer un état de commutation du mode d'entraînement du véhicule électrique hybride, dans lequel l'état de commutation comprend un état de commutation du mode d'entraînement du véhicule électrique hybride d'un mode d'entraînement en série à un mode d'entraînement en parallèle, et un état de commutation du mode d'entraînement du véhicule électrique hybride du mode d'entraînement en parallèle au mode d'entraînement en série ;
en réponse à l'état de commutation consistant à commuter le mode d'entraînement du véhicule électrique hybride du mode d'entraînement en série au mode d'entraînement en parallèle, régler un couple d'un moteur (1) à un couple cible du moteur (1) dans le mode d'entraînement en parallèle, régler une vitesse de rotation du moteur (1) pour qu'elle soit identique à une vitesse de rotation actuelle d'un moteur d'entraînement (4) dans le mode d'entraînement en série, mettre en prise un embrayage (3), réduire le couple d'un générateur électrique (2) à zéro, et réduire le couple du moteur d'entraînement (4) ;
dans lequel une réduction du couple du moteur d'entraînement (4) est égale à la réduction du couple du générateur électrique (2) ;
en réponse à l'état de commutation consistant à commuter le mode d'entraînement du véhicule électrique hybride du mode d'entraînement en parallèle au mode d'entraînement en série, augmenter le couple du générateur électrique (2) pour absorber le couple du moteur (1), et transférer le couple absorbé par le générateur électrique (2) au moteur d'entraînement (4) avec la même amplitude, et en réponse à la détermination que le couple du générateur électrique (2) est égal au couple du moteur (1), régler le couple du moteur d'entraînement (4) au couple cible du moteur d'entraînement (4) dans le mode d'entraînement en série, et en réponse à la vitesse de rotation du moteur (1) étant égale à la vitesse de rotation du moteur d'entraînement (4), désengager l'embrayage (3), et
régler, respectivement, le couple du moteur (1) et la vitesse de rotation du moteur (1) au couple cible du moteur (1) et à une vitesse de rotation cible du moteur (1) dans le mode d'entraînement en série.

2. Procédé de commande d'une commutation du mode d'entraînement d'un véhicule électrique hybride selon la revendication 1, dans lequel le réglage d'un couple d'un moteur (1) à un couple cible du moteur (1) dans le mode d'entraînement en parallèle, et le réglage d'une vitesse de rotation du moteur (1) pour qu'elle soit identique à une vitesse de rotation actuelle d'un moteur d'entraînement (4) dans le mode d'entraînement en série comprennent :

déterminer le couple cible du moteur (1) comme $T_{Eng\_Tgt}$, le couple cible du moteur d'entraînement (4) comme $T_{Tm\_Tgt}$, la vitesse de rotation cible du moteur (1) comme $n_{Eng\_Tgt}$, et un couple de demande du générateur électrique (2) comme $T_{Gm\_Tgt}$ ; dans lequel, dans le mode d'entraînement en parallèle, un état de fonctionnement du moteur (1) comprend un sous-mode d'entraînement et de charge, un sous-mode d'entraînement et d'assistance et un sous-mode de coupure de carburant du moteur (1), et
dans le sous-mode d'entraînement et de charge, $T_{Eng\_Tgt} = \min(T_{Drv}-T_{Tm\_PaSoc}, T_{Eng\_PaMax})$,
dans le sous-mode d'entraînement et d'assistance, $T_{Eng\_Tgt} = \min(T_{Drv}, T_{Eng\_PaMax})$,
dans le sous-mode de coupure de carburant du moteur (1),

$$T_{Eng\_Tgt} = -T_{Eng\_Los} \; ;$$

$$T_{Tm\_Tgt}=T_{Drv}; \; n_{Eng\_Tgt}=n_{Tm}; \; T_{Gm\_Tgt}=-T_{Eng\_Act}+(J_{Eng}+J_{Gm}+J_{Gear})dn_{Eng}/dt+T_{CL};$$

dans lequel $T_{Drv}$ désigne un couple de demande du conducteur, $T_{Tm\_PaSoc}$ désigne un couple de génération électrique négatif du moteur d'entraînement (4) dans le mode d'entraînement en parallèle, calculé sur la base d'un système sur puce (SOC) actuel, $T_{Eng\_PaMax}$ désigne une limite de couple supérieure du moteur (1) dans le mode d'entraînement en parallèle, $T_{Eng\_Los}$ désigne un couple de frottement du moteur (1) à une vitesse de rotation actuelle, $n_{Tm}$ désigne la vitesse de rotation actuelle du moteur d'entraînement (4), $T_{Eng\_Act}$ désigne un couple réel du moteur (1), $J_{Eng}$ désigne un moment d'inertie du moteur (1), $J_{Gm}$ désigne un moment d'inertie du générateur électrique (2), $J_{Gear}$ désigne un moment d'inertie d'un train d'engrenages entre le moteur (1) et le générateur électrique (2), et $T_{CL}$ désigne un couple proportionnel intégré (PI) de réglage de la vitesse.

3. Procédé de commande d'une commutation du mode d'entraînement d'un véhicule électrique hybride selon la revendication 1, dans lequel, avant de mettre en prise l'embrayage (3), le procédé comprend en outre : déterminer si une différence entre le couple du moteur (1) et le couple cible du moteur (1) est inférieure à une différence de couple prédéfinie et si une différence entre la vitesse de rotation du moteur (1) et la vitesse de rotation cible du moteur (1) est inférieure à une différence de vitesse de rotation prédéfinie, et mettre en prise l'embrayage (3) en réponse à la différence entre le couple du moteur (1) et le couple cible du moteur (1) étant inférieure à la différence de couple prédéfinie et la différence entre la vitesse de rotation du moteur (1) et la vitesse de rotation cible du moteur (1) étant inférieure à la différence de vitesse de rotation prédéfinie.

4. Procédé de commande d'une commutation du mode d'entraînement d'un véhicule électrique hybride selon la revendication 1, dans lequel, dans un processus d'engagement de l'embrayage (3), une pression d'huile de l'embrayage (3) est progressivement augmentée, et une vitesse de chargement de la pression d'huile en combinaison avec un étalonnage de la performance du véhicule est obtenue.

5. Procédé de commande d'une commutation du mode d'entraînement d'un véhicule électrique hybride selon la revendication 1, dans lequel la réduction du couple d'un générateur électrique (2) à zéro et la réduction du couple du moteur d'entraînement (4) comprennent :

déterminer le couple cible du moteur d'entraînement (4) comme $T_{Tm\_Tgt}$, et le couple de demande du générateur électrique (2) comme $T_{Gm\_Tgt}$,

$$\begin{cases} T_{Gm\_Tgt} = min\left(0, T_{Gm\_Tgt}^{*} + \sum \Delta T_{Stp}\right) \\ T_{Tm\_Tgt} = max\left(T_{Drv} - T_{Eng\_Act}, T_{Tm\_Tgt}^{*} - \sum \Delta T_{Stp}\right) \end{cases}$$

dans lequel $T_{Drv}$ désigne le couple de demande du conducteur, $T_{Eng\_Act}$ désigne le couple réel du moteur (1), $\Delta T_{stp}$ désigne un pas de réglage du couple synchrone du générateur électrique (2) et du moteur d'entraînement (4), et $T_{Gm\_Tgt}^{*}$ et $_{Tm\_Tgt}$ désignent, respectivement, un couple de demande de sortie du générateur électrique (2) et un couple cible de sortie du moteur d'entraînement (4) dans un dernier cycle de calcul.

6. Procédé de commande d'une commutation du mode d'entraînement d'un véhicule électrique hybride selon la revendication 1, dans lequel l'augmentation du couple du générateur électrique (2) pour absorber le couple du moteur (1), le transfert du couple absorbé par le générateur électrique (2) au moteur d'entraînement (4) avec la même amplitude comprennent :

déterminer le couple cible du moteur (1) comme $T_{Eng\_Tgt}$, le couple cible du moteur d'entraînement (4) comme $T_{Tm\_Tgt}$, et le couple de demande du générateur électrique (2) comme $T_{Gm\_Tgt}$ ; et dans le mode d'entraînement en parallèle, un état de fonctionnement du moteur (1) comprend un sous-mode d'entraînement et de charge, un sous-mode d'entraînement et d'assistance et un sous-mode de coupure de carburant du moteur (1),
dans le sous-mode d'entraînement et de charge, $T_{Eng\_Tgt} = min(T_{Drv}-T_{Tm\_PaSoc}, T_{Eng\_PaMax})$,
dans le sous-mode d'entraînement et d'assistance, $T_{Eng\_Tgt} = min(T_{Drv}, T_{Eng\_PaMax})$, et
dans le sous-mode de coupure de carburant du moteur (1),

$$T_{Eng\_Tgt} = -T_{Eng\_Los} \; ;$$

$$
\begin{cases}
T_{\text{Gm\_Tgt}} = max \left( -T_{\text{Eng\_Act}},\ T_{\text{Gm}_{\text{Tgt}}}^{+} - \sum \Delta T_{\text{Stp}} \right) \\
T_{\text{Tm\_Tgt}} = min \left( T_{\text{Drv}},\ T_{\text{Tm\_Tgt}}^{+} + \sum \Delta T_{\text{Stp}} \right)
\end{cases}
$$

dans lequel $T_{\text{Drv}}$ désigne le couple de demande du conducteur, $T_{\text{Tm\_PaSoc}}$ désigne le couple de génération électrique négatif du moteur d'entraînement (4) dans le mode d'entraînement en parallèle, calculé sur la base **d'un** SOC actuel, $T_{\text{Eng\_PaMax}}$ désigne la limite de couple supérieure du moteur (1) dans le mode d'entraînement en parallèle, $T_{\text{Eng\_Los}}$ désigne le couple de frottement du moteur (1) à une vitesse de rotation actuelle, $T_{\text{Eng\_Act}}$ désigne le couple réel du moteur (4), $\Delta_{\text{Tstp}}$ désigne le pas de réglage du couple synchrone du générateur électrique (2) et du moteur d'entraînement (4), et $T^{*}_{\text{Gm\_Tgt}}$ et $T^{*}_{\text{Tm\_Tgt}}$ désignent, respectivement, le couple de demande de sortie du générateur électrique (2) et le couple cible de sortie du moteur d'entraînement (4) dans un dernier cycle de calcul.

7. Procédé de commande d'une commutation du mode d'entraînement d'un véhicule électrique hybride selon la revendication 1, dans lequel, en réponse à la détermination que le couple du générateur électrique (2) est égal au couple du moteur (1), régler le couple du moteur d'entraînement (4) au couple cible du moteur d'entraînement (4) dans le mode d'entraînement en série, et une vitesse de rotation du moteur (1) est égale à une vitesse de rotation du moteur d'entraînement (4), le procédé comprend :
déterminer le couple cible du moteur d'entraînement (4) comme $T_{\text{Tm\_Tgt}}$, la vitesse de rotation cible du moteur (1) comme $n_{\text{Eng\_Tgt}}$, et le couple de demande du générateur électrique (2) comme $T_{\text{Gm\_Tgt}}$, et

$$T_{\text{Tm\_Tgt}} = T_{\text{Drv}};\ n_{\text{Eng\_Tgt}} = n_{\text{Tm}};\ T_{\text{Gm\_Tgt}} = -T_{\text{Eng\_Act}} + (J_{\text{Eng}} + J_{\text{Gm}} + J_{\text{Gear}})dn_{\text{Eng}}/dt + T_{\text{CL}};$$

dans lequel $T_{\text{Drv}}$ désigne le couple de demande du conducteur, $n_{\text{Tm}}$ désigne la vitesse de rotation actuelle du moteur d'entraînement (4), $T_{\text{Eng\_Act}}$ désigne le couple réel du moteur (1), $J_{\text{Eng}}$ désigne le moment d'inertie du moteur (1), $J_{\text{Gm}}$ désigne le moment d'inertie du générateur électrique (2), $J_{\text{Gear}}$ désigne le moment d'inertie d'un train d'engrenages entre le moteur (1) et le générateur électrique (2), et $T_{\text{CL}}$ désigne le couple PI de réglage de la vitesse.

8. Procédé de commande d'une commutation du mode d'entraînement d'un véhicule électrique hybride selon la revendication 1, dans lequel le réglage du couple et de la vitesse de rotation du moteur (1) à un couple cible du moteur (1) et à une vitesse de rotation cible du moteur (1) dans le mode d'entraînement en série comprend respectivement :
déterminer le couple cible du moteur (1) comme $T_{\text{Eng\_Tgt}}$, et la vitesse de rotation cible du moteur (1) comme $n_{\text{Eng\_Tgt}}$, et

$$T_{\text{Eng\_Tgt}} = T_{\text{Eng\_Se}},\ \text{and}\ n_{\text{Eng\_Tgt}} = n_{\text{Eng\_Se}};$$

dans lequel $T_{\text{Eng\_se}}$ et $n_{\text{Eng\_se}}$ désignent, respectivement, un couple et une vitesse de rotation du moteur à un point cible de puissance de production électrique, calculés par un module de gestion de l'énergie du véhicule.

9. Véhicule, comprenant un moteur (1), un générateur électrique (2), un embrayage (3), un moteur d'entraînement (4), un décélérateur principal et un différentiel (5), et une paire d'engrenages (6), dans lequel le moteur (1) est relié au générateur électrique (2) par la paire d'engrenages (6), l'embrayage (3) est relié entre le moteur (1) et le moteur d'entraînement (4), et le décélérateur principal et le différentiel (5) sont reliés entre le moteur d'entraînement (4) et un essieu, dans lequel le véhicule est configuré pour exécuter le procédé de commande d'une commutation du mode d'entraînement d'un véhicule électrique hybride selon l'une quelconque des revendications 1-8.

10. Support de stockage stockant un programme informatique, dans lequel le programme informatique met en œuvre le procédé de commande d'une commutation du mode d'entraînement d'un véhicule électrique hybride selon l'une quelconque des revendications 1-8, lorsque le programme est exécuté par au moins un processeur.

**Fig.1**

Determine a switching state of a driving mode of a hybrid electric vehicle

The switching state is to switch the driving mode of the hybrid electric vehicle from a series driving mode to a parallel driving mode

The switching state is to switch the driving mode of the hybrid electric vehicle from the parallel driving mode to the series driving mode

Adjust torque of an engine to target torque of the engine in the parallel driving mode, and adjust a rotation speed of the engine to be the same as a current rotation speed of a driving motor in the series driving mode

Increase torque of the electric generator to absorb torque of the engine, and transfer the torque absorbed by the electric generator to the driving motor with the same amplitude

Engage a clutch

Under the condition of determining that the torque of the electric generator equals torque of the engine, torque of the driving motor is adjusted to target torque of the driving motor in the series driving mode, and a rotation speed of the engine equals a rotation speed of the driving motor, disengage the clutch

Reduce torque of an electric generator to zero, and reduce torque of the driving motor

Adjust the torque and the rotation speed of the engine to target torque of the engine and a target rotation speed of the engine in the series driving mode respectively

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110814677
- EP 2944496 A1
- US 2020164864 A1
- JP 2000299903 A